# NEUE EUROPÄISCHE PATENTSCHRIFT

(11) **EP 2 020 506 B2**
(45) Veröffentlichungstag und Bekanntmachung des Hinweises auf die Entscheidung über den Einspruch: **28.08.2019**
(45) Hinweis auf die Patenterteilung: 04.05.2016
(21) Anmeldenummer: 08012892.9
(22) Anmeldetag: 17.07.2008
(51) Int. Cl.: F03D 7/04, F03D 9/00, H02J 3/38

(54) **Verfahren zur Ermittlung einer Regelungsreserve sowie Windpark**
Method for calculating a regulation reserve and wind energy facility with a control unit for same method
Procédé de détermination d'une réserve de réglage ainsi qu'éolienne dotée d'une unité de commande destinée à déterminer la réserve de réglage

(30) Priorität: 02.08.2007 DE 102007036446
(43) Veröffentlichungstag der Anmeldung: 04.02.2009
(60) Teilanmeldung: 16157800.0
(73) Patentinhaber: Nordex Energy GmbH, 22419 Hamburg (DE)
(72) Erfinder: Jurkat, Mark, 22844 Norderstedt (DE)
(74) Vertreter: Hauck Patentanwaltspartnerschaft mbB

(56) Entgegenhaltungen:
- EP-A2- 1 672 778
- WO-A1-2005/025026
- US-A1- 2003 102 675
- US-A1- 2007 090 651
- ZBIGNIEW LUBOSNY ET AL: "Supervisory Control of a Wind Farm", IEEE TRANSACTIONS ON POWER SYSTEMS, IEEE SERVICE CENTER, PISCATAWAY, NJ, US, Bd. 22, Nr. 3, 1. August 2007 (2007-08-01) , Seiten 985-994, XP011189262, ISSN: 0885-8950, DOI: DOI:10.1109/TPWRS.2007.901101

## Beschreibung

Die vorliegende Erfindung betrifft ein Verfahren zur Ermittlung einer Regelungsreserve von einer oder mehreren Windenergieanlagen, denen zum Betrieb ein Sollwert für mindestens eine elektrische Größe vorgegeben ist.
Mit der zunehmenden Leistungsfähigkeit von Windenergieanlagen und deren Zusammenschluß zu Windparks besteht das Bedürfnis, die Einspeisung von elektrischer Leistung in das Stromnetz regeln bzw. steuern zu können. Bereits jetzt ist bekannt, Windenergieanlagen und Windparks mit einer gedrosselten Leistung zu betreiben, wenn keine höhere Leistung in das Netz eingespeist werden kann.
Aus Zbigniew Lubosny et al. "Supervisory Control of a Wind Farm", IEE Transactions on Power Systems, IEEE Service Center, Piscataway, NJ, US, Bd. 22, Nr. 3, sind verschiedene Formen der Leistungsregelung in einem Windpark bekannt, wobei eine oder mehrere Windenergieanlagen in dem Park im Teillastbetrieb (gegenüber der aktuell verfügbaren Windkapazität) betrieben und für eine Leistungsregelung benutzt werden. Ferner wird für den Teillastbetrieb der Windenergieanlage oder eines gesamten Windparks erläutert, dass diese zur Bereitstellung einer konstanten Leistung oder zur Bereitstellung einer konstanten Leistungsreserve (delta control) eingesetzt werden können.

Aus WO 2005/025026 A1 ist ein Verfahren zum Betrieb bzw. zur Regelung einer Windenergieanlage sowie ein Verfahren zur Bereitstellung von Primärregelleistung durch Windenergieanlagen bekannt. Hierbei wird die kinetische Energie des Rotors zusätzlich in elektrische Leistung umgewandelt und eingespeist.

Aus US 2007/0090651 A1 ist ein Windpark bekannt, bei dem eine Differenz zwischen einer maximal möglichen, einspeisbaren Leistung und einer tatsächlich eingespeisten Leistung über ein virtuelles Strommeter erfasst wird und von dem Netzwerkbetreiber vergütet werden kann. Aus US 2003/0102675 A1 ist ein Verfahren zur Koordinierung von Stromerzeugern und Verbrauchern in einem Stromnetz bekannt geworden, bei dem Wetterdaten aufgezeichnet werden, wobei diese auch eine Windrichtung enthalten.

Der Erfindung liegt die Aufgabe zugrunde, ein Verfahren und eine Windenergieanlage bereitzustellen, die die Möglichkeiten bieten, bei einem gedrosselten Betrieb die vorhandene Regelungsreserve einer elektrischen Größe aktuell mit einfachen Mitteln abzuschätzen.

Die erfindungsgemäße Aufgabe wird durch ein Verfahren mit den Merkmalen aus Anspruch 1 und eine Windenergieanlage mit den Merkmalen des Anspruchs 10 gelöst.

Bei dem erfindungsgemäßen Verfahren wird eine Regelungsreserve von einer oder mehreren Windenergieanlagen ermittelt. Beim Betrieb der Windenergie anlagen liegt eine Regelungsreserve vor, wenn zum Betrieb der Windenergieanlage ein Sollwert für mindestens eine elektrische Größe vorgegeben ist, der kleiner als der mögliche maximale Wert ist. Die Steuereinheit, die die Regelungsreserve ermittelt, weist eine Leistungskurve auf, in der abhängig von Werten des Windes mindestens ein Maximalwert der elektrischen Größe abgelegt ist. Die Leistungskurve kann ganz oder teilweise gemessene Werte enthalten, es ist aber auch möglich, mit einer theoretischen Kennlinie, die anfänglich gesetzte Werte beinhaltet, zu arbeiten. Bei dem erfindungsgemäßen Verfahren ermittelt die Steuereinheit aus dem Istwert des Windes den Maximalwert der elektrischen Größe, der aktuell eingespeist werden könnte. Bei dem Maximalwert handelt es sich um einen über ein Zeitintervall gemittelten Wert, der im Betrieb auch kurzzeitig über- oder unterschritten werden könnte. Von diesem Maximalwert wird ein aktueller Wert der elektrischen Größe subtrahiert. Die von der Steuereinheit ermittelte Differenz wird als Regelungsreserve an eine übergeordnete Steuereinheit und/oder an ein externes Energieversorgungsunternehmen übermittelt. Bei dem erfindungsgemäßen Verfahren wird also anhand des aktuellen Werts einer elektrischen Größe und dem gemessenen Wind über die Leistungskurve der Istwert der Regelungsreserve bestimmt. Bei dem aktuellen Wert der elektrischen Größe kann es sich um den Istwert oder den Sollwert der elektrischen Größe handeln.

Als Regelungsreserve wird bevorzugt die positive Differenz angesehen, bei der die Windenergieanlage bzw. die Windenergieanlagen größere Werte der elektrischen Größe produzieren könnten als aufgrund der Sollwertvorgabe gegenwärtig zugelassen.

Bei dem erfindungsgemäßen Verfahren kann als elektrische Größe die erzeugte Wirkleistung vorgesehen sein. In diesem Zusammenhang wird die Regelungsreserve auch gelegentlich als Vorhaltewirkleistung bezeichnet. Alternativ oder zusätzlich kann als elektrische Größe die erzeugte Blindleistung abgestellt werden. Auch kann als elektrische Größe auf den Phasenwinkel und/oder den Leistungsfaktor abgestellt werden. Der Begriff der Leistungskurve bezieht sich also nicht ausschließlich auf eine bereitzustellende elektrische Leistung, sondern allgemein auf eine elektrische Größe und gibt für diese an, welcher maximale Wert geleistet werden kann.

In einer bevorzugten Ausgestaltung wird der Sollwert der elektrischen Größe von einer übergeordneten Steuereinheit vorgegeben werden. Eine Betriebssteuerung der Windenergieanlage oder eine Steuereinheit für mehrere Windenergieanlagen ermittelt aus dem vorgegebenen Sollwert bevorzugt die Sollwerte für die einzelnen Windenergieanlagen, die dann entsprechend umgesetzt werden.

Erfindungsgemäß wird bei dem relevanten Wert des Windes auf die Windgeschwindigkeit und die Windrichtung abgestellt, wobei als Wert des Windes die Windgeschwindigkeit gemessen und die Windrichtung zusätzlich berücksichtigt wird.

In einzelnen Ausführungsbeispielen kann vorgesehen sein, daß die Windgeschwindigkeit an einem Wettermast gemessen wird, wobei der Wettermast zweckmäßigerweise in einer zur Messung der Windgeschwindigkeit günstigen Position relativ zu der oder den Windenergieanlagen aufgestellt ist.

Alternativ oder zusätzlich ist es auch möglich, daß die Windgeschwindigkeit an einer oder mehreren Windenergieanlagen gemessen wird.

Die erfindungsgemäße Aufgabe wird ebenfalls durch einen Windpark mit einer Vielzahl von Windenergieanlagen mit einer Steuereinheit und einer Betriebssteuerung gelöst. Die Steuereinheit ermittelt eine Regelungsreserve für eine elektrische Größe. Die Betriebssteuerung ist dafür vorgesehen, während des Betriebs der Windenergieanlage den Sollwert für mindestens eine elektrische Größe der einzuspeisenden Leistung vorzugeben. Ferner liegt an der Steuereinheit ein Istwert für die elektrische Größe und für den Wind an. Die erfindungsgemäße Steuereinheit zeichnet sich dadurch aus, daß sie eine Leistungskurve aufweist, die einen Maximalwert der elektrischen Größe abhängig von einem Wert des Windes angibt. Die Steuereinheit ermittelt die Differenz zwischen dem aktuellen Maximalwert und einem aktuellen Wert der elektrischen Größe. Diese Differenz bildet die Regelungsreserve. Die erfindungsgemäße Windenergieanlage kann mit der Steuereinheit und der Leistungskurve während eines gedrosselten Betriebs jederzeit angeben, wie groß die gegenwärtig abrufbare Reserve ist. Der aktuelle Wert der elektrischen Größe ist bevorzugt der Istwert oder der Sollwert der elektrischen Größe.

In einer bevorzugten Ausgestaltung ist die Windenergieanlage mit Mitteln zum Messen des Istwerts der elektrischen Größe ausgestattet.

Bevorzugt ist die elektrische Größe der Leistungskurve die erzeugte Wirkleistung der Windenergieanlage. Alternativ kann als elektrische Größe der Leistungskurve die erzeugte Blindleistung der Windenergieanlage vorgesehen sein. Es ist ebenfalls möglich, als elektrische Größe bei der Leistungskurve auf den Phasenwinkel und/oder den Leistungsfaktor abzustellen.

In einer bevorzugten Ausgestaltung erhält die Betriebssteuerung der Windenergieanlage den Sollwert für die elektrische Größe von einer übergeordneten Steuereinheit.

Erfindungsgemäß ist in der Leistungskurve der Maximalwert der elektrischen Größe abhängig von der Windgeschwindigkeit und der Windrichtung abgelegt. Es ist jedoch durchaus auch denkbar, als Werte für den Wind andere Größen wie beispielsweise Luftdruck, Luftfeuchtigkeit etc. zusätzlich zu berücksichtigen.

Das erfindungsgemäße Verfahren kann besonders bevorzugt bei einem Windpark mit einer Vielzahl von Windenergieanlagen eingesetzt werden. Hierbei wird die Regelungsreserve der Windenergieanlagen nach dem erfindungsgemäßen Verfahren bestimmt. Eine Steuereinheit besitzt dabei mehrere Leistungskurven für einzelne Windenergieanlagen und/oder für Gruppen von Windenergieanlagen. In dem Windpark kann die erzeugte Leistung zentral im Windpark und/oder lokal gemessen werden, um die Regelungsreserve zu bestimmen. Auch können mehrere Steuereinheiten vorgesehen sein, die die ermittelten Regelungsreserven an eine übergeordnete Steuereinheit weiterleiten.

Die Erfindung wird nachfolgend an einem Beispiel näher erläutert. Es zeigt:
Fig. 1 einen Windpark mit zwei Segmenten,
Fig. 2 eine Leistungskurve, bei der die Wirkleistung über der Windgeschwindigkeit aufgetragen ist, und
Fig. 3 ein Säulendiagramm für die Regelungsreserve innerhalb eines Windparks.

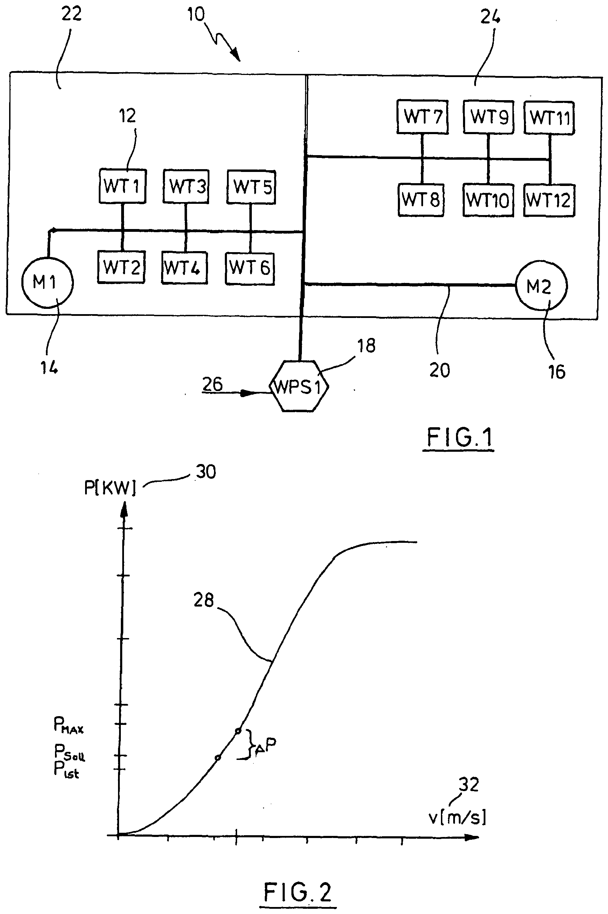

Fig. 1 zeigt in einer schematischen Ansicht einen Windpark 10 mit zwölf Windenergieanlagen 12, die als WT1 bis WT12 bezeichnet sind. Ferner sind in dem Windpark zwei Wettermasten 14 und 16 errichtet. Die in Figur 1 gezeigte Position der Wettermasten 14 und 16 spiegelt nicht unbedingt die relative Lage der Wettermasten zu den Windenergieanlagen 12 wieder. Über ein Kommunikationsnetzwerk 20 sind die Windenergieanlagen 12, die Wettermasten 14, 16 mit einer zentralen Windparksteuerung 18 verbunden. Über das Datennetzwerk 20 können Daten und Signale von den Windenergieanlagen 12, den Wettermasten 14 und 16 bidirektional mit der zentralen Windparksteuerung 18 ausgetauscht werden.

In dem in Figur 1 dargestellten Beispiel sind die Windenergieanlagen 12 in zwei Segmente 22 und 24 unterteilt, wobei dem ersten Segment 22 die Windenergieanlagen WT1 bis WT6 und dem zweiten Segment 24 die Windenergieanlagen WT7 bis WT12 zugeordnet sind. Von den Wettermasten ist der mit M1 gekennzeichnete Wettermast 14 dem ersten Segment 22 zugeordnet, während der mit M2 gekennzeichnete zweite Wettermast 16 dem zweiten Segment 24 zugeordnet ist.

In dem beschriebenen Ausführungsbeispiel liegt an der zentralen Windparksteuerung 18 ein extern vorgegebener Sollwert 26 für die maximal einzuspeisende Wirkleistung an. Die zentrale Windparksteuerung 18 ermittelt aus dem anliegenden Sollwert 26 jeweils Wirkleistungssollwerte für das erste Segment 22 und das zweite Segment 24. In einem nachfolgenden Schritt, der ebenfalls von der zentralen Windparksteuerung 18 ausgeführt werden kann oder der auf mehrere Steuerungen verteilt werden kann, werden aus dem für das Segment 22, 24 vorgegebenen Wirkleistungssollwert jeweils Sollwerte für die Windenergieanlagen WT1 bis WT6 bzw. WT7 bis WT12 ermittelt.

Unabhängig von der Verteilung der erzeugten Wirkleistung in den ersten und dem zweiten Segment ist für das gesamte Segment eine Leistungskurve in der zentralen Windparksteuerung 18 hinterlegt. Die Leistungskurve ist beispielhaft in Figur 2 dargestellt. Bei der dargestellten Leistungskurve 28 ist die Wirkleistung 30 der Windenergieanlagen eines Segments über der Windgeschwindigkeit 32 aufgetragen. In der dargestellten Auftragung über der absoluten Windgeschwindigkeit ist es auch denkbar, andere Einflußfaktoren des Windes zu berücksichtigen. So können beispielsweise unterschiedliche Leistungskurven abhängig von der Windrichtung hinterlegt sein. Auch ist es möglich, in jeder der Windenergieanlagen eine Leistungskurve für die Anlage zu hinterlegen und so für jede Anlage ihren Maximalwert zu ermitteln.

Bei der Bestimmung der Leistungsreserve ermittelt die Windparksteuerung den aktuellen Wert für den Wind v1 und bestimmt über die Leistungskurve 28 daraus den maximalen Leistungswert P_{max.} Gleichzeitig liegt der zentralen Windparksteuerung 18 ein ermittelter Sollwert für die in dem betrachteten Segment erzeugte Wirkleistung vor. Der Sollwert ist in Figur 2 beispielhaft als Pₛₒₗₗ eingezeichnet. Wie bereits angesprochen, besteht eine positive Leistungsreserve des Windparks bzw. des Segments des Windparks dann, wenn der Sollwert kleiner als der mögliche Maximalwert ist. Betrachtet man nun den Fall, daß der Betriebszustand der Windenergieanlage eingeregelt ist, so entspricht der Istwert der erzeugten Leistung dem vorgegebenen Sollwert. Um etwaige Verzögerungen beim Einregeln der Leistungswerte zu berücksichtigen, wird für die Ermittlung der Leistungsreserve auf den Istwert Pᵢₛₜ abgestellt. Die Differenz ΔP zwischen maximalem Leistungswert Pₘₐₓ und Istwert der Leistung Pᵢₛₜ ist in Figur 2 als ΔP eingezeichnet. ΔP ist diejenige Leistungsgröße, die bei konstanter Windgeschwindigkeit kurzfristig als Leistungsreserve bereitgestellt werden kann.

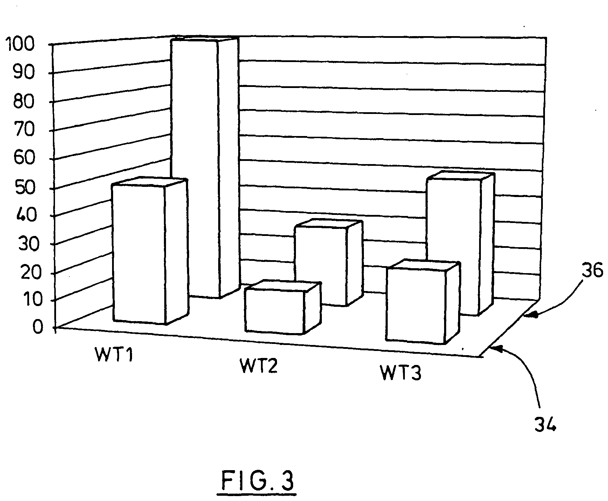

Figur 3 betrachtet den Fall, daß einzelnen Windenergieanlagen unterschiedliche Sollwerte für die Wirkleistung vorgegeben werden. So ist beispielsweise in Figur 3 der Windenergieanlage WT1 ein Leistungssollwert vorgegeben, der ungefähr 4 bis 5 Mal so groß ist wie der Leistungssollwert für die Windenergieanlage WT2. Die Leistungsistwerte der Windenergieanlagen sind als vordere Säulen 34 in Figur 3 dargestellt. Als hintere Säulen 36 sind in Figur 3 die maximal verfügbaren Leistungen der einzelnen Windenergieanlagen dargestellt. Deutlich zu erkennen in Figur 3 ist, daß die Leistungsistwerte 34 jeweils geringer sind als die mögliche Maximalleistung der Windenergieanlagen WT 1 - WT3. Die Regelungsreserve bei dem in Figur 3 dargestellten Beispiel ergibt sich insgesamt aus der Summe der Regelungsreserven an den einzelnen Windenergieanlagen. Die notwendige Zeit, um die Regelungsreserve bereitzustellen, bestimmt sich hierbei aus der Zeit, die die regelungstechnisch langsamste Windenergieanlage braucht, um ihre Regelungsreserve abzurufen.

## Patentansprüche

1. Verfahren zur Ermittlung einer Regelungsreserve von einer oder mehreren Windenergieanlagen, denen zum Betrieb ein Sollwert für mindestens eine elektrische Größe vorgegeben und für die eine Steuereinheit vorgesehen ist, die eine Leistungskurve aufweist, welche abhängig von Werten des Windes einen Maximalwert der elektrischen Größe enthält, das Verfahren weist folgende Schritte auf:
- Die Steuereinheit ermittelt über die Leistungskurve aus dem Istwert des Windes einen Maximalwert der elektrischen Größe und subtrahiert hiervon einen aktuellen Wert der elektrischen Größe,
- die Steuereinheit übermittelt die Differenz als Regelungsreserve an eine übergeordnete Steuereinheit und/oder an ein externes Energieversorgungsunternehmen, wobei die Regelungsreserve die gegenwärtig abrufbare Reserve darstellt,
- wobei als Wert des Windes die Windgeschwindigkeit gemessen und die Windrichtung zusätzlich berücksichtigt wird.

2. Verfahren nach Anspruch 1, **dadurch gekennzeichnet, daß** der aktuelle Wert der elektrischen Größe der Istwert der elektrischen Größe ist.

3. Verfahren nach Anspruch 1, **dadurch gekennzeichnet, daß** der aktuelle Wert der elektrischen Größe der Sollwert der elektrischen Größe ist.

4. Verfahren nach einem der Ansprüche 1 bis 3, **dadurch gekennzeichnet, daß** als elektrische Größe die erzeugte Wirkleistung vorgesehen ist.

5. Verfahren nach einem der Ansprüche 1 bis 3, **dadurch gekennzeichnet, daß** als elektrische Größe die erzeugte Blindleistung vorgesehen ist.

6. Verfahren nach einem der Ansprüche 1 bis 3, **dadurch gekennzeichnet, daß** als elektrische Größe der Phasenwinkel und/oder der Leistungsfaktor vorgesehen ist.

7. Verfahren nach einem der Ansprüche 1 bis 6, **dadurch gekennzeichnet, daß** der Sollwert der elektrischen Größe von einer übergeordneten Steuereinheit vorgegeben wird.

8. Verfahren nach Anspruch 1, **dadurch gekennzeichnet, daß** die Windgeschwindigkeit an einem Wettermast (14, 16) gemessen wird.

9. Verfahren nach Anspruch 1 oder 8, **dadurch gekennzeichnet, daß** die Windgeschwindigkeit an einer oder mehreren der Windenergieanlagen gemessen wird.

10. Windpark mit einer Vielzahl von Windenergieanlagen, deren Regelungsreserve nach dem Verfahren gemäß den Ansprüchen 1 bis 9 bestimmt wird, **dadurch gekennzeichnet, daß** eine Steuereinheit (18) mit mehreren Leistungskurven für einzelne Windenergieanlagen und/oder Gruppen von Windenergieanlagen vorgesehen ist.

11. Windpark nach Anspruch 10, **dadurch gekennzeichnet, daß** die erzeugte Leistung zentral im Windpark gemessen wird.

12. Windpark nach Anspruch 10 oder 11, **dadurch gekennzeichnet, daß** mindestens eine Windenergieanlage ihre erzeugte Leistung mißt.

13. Windpark nach einem der Ansprüche 10 bis 12, **dadurch gekennzeichnet, daß** mehrere Steuereinheiten vorgesehen sind, denen eine Steuereinheit übergeordnet ist, an der die Regelungsreserven der Steuereinheit (18) anliegen.

## Claims

1. A method for determining a control reserve of one or plural wind turbines, for which a desired value for at least one electric variable is pre-set for the operation, and for which a control unit is provided that comprises a power curve which contains a maximum value of the electric variable depending on values of the wind, the method comprising the following steps:
• the control unit determines a maximum value of the electric variable from the actual value of the wind via the power curve, and subtracts an actual value of the electric variable from it,
• the control unit transmits the difference as control reserve to a higher-level control unit and/or to an utility, wherein the control reserve is the currently retrievable reserve,
• whereas the wind velocity is measured as the value of the wind and the direction of the wind is taken into account, additionally.

2. The method according to claim 1, **characterised in that** the actual value of the electric variable is the real value of the electric variable.

3. The method according to claim 1, **characterised in that** the actual value of the electric variable is the desired value of the electric variable.

4. A method according to any one of claims 1 to 3, **characterised in that** the generated active power is provided as electric variable.

5. A method according to any one of claims 1 to 3, **characterised in that** the generated reactive power is provided as electric variable.

6. A method according to any one of claims 1 to 3, **characterised in that** the phase angle and/or the power factor is provided as the electric variable.

7. A method according to any one of claims 1 to 6, **characterised in that** the desired value of the electric variable is pre-set by a higher-level control unit.

8. The method according to claim 1, **characterised in that** the wind velocity is measured at a weather mast (14, 16).

9. A method according to claim 1 or 8, **characterised in that** the wind velocity is measured at one or plural ones of the wind turbines.

10. A wind farm comprising a plurality of wind turbines whose control reserve is determined by the method according to the claims 1 to 9, **characterised in that** a control unit (18) is provided which comprises plural power curves for individual wind turbines and/or groups of wind turbines.

11. The wind farm according to claim 10, **characterised in that** the generated power is measured centrally in the wind farm.

12. A wind farm according to claim 10 or 11, **characterised in that** at least one wind turbine measures its generated power.

13. A wind farm according to any one of claims 10 to 12, **characterised in that** plural control units are provided for which one control unit is superordinate and to which the control reserves of the control unit (18) are applied.

## Revendications

1. Procédé pour la détermination d'une réserve de régulation d'une ou plusieurs éoliennes, pour lesquelles une valeur de consigne d'au moins une grandeur électrique est prescrite pour le fonctionnement et pour lesquelles une unité de commande est pourvue qui comporte une courbe de puissance qui contient une valeur maximale de la grandeur électrique en fonction de valeurs du vent, le procédé comporte les étapes suivantes :
• l'unité de commande détermine une valeur maximale de la grandeur électrique à partir de la valeur réelle du vent via la courbe de puissance, et soustrait une valeur momentanée de la grandeur électrique de cela,
• l'unité de commande transmet la différence comme réserve de régulation à une unité de commande en amont et/ou à une entreprise d'approvisionnement en énergie, la réserve de régulation étant la réserve actuellement accessible,
• dans lequel la vitesse du vent est mesurée comme valeur du vent et la direction du vent est prise en plus en considération.

2. Procédé selon la revendication 1, **caractérisé en ce que** la valeur momentanée de la grandeur électrique est la valeur réelle de la grandeur électrique.

3. Procédé selon la revendication 1, **caractérisé en ce que** la valeur momentanée de la grandeur électrique est la valeur de consigne de la grandeur électrique.

4. Procédé selon l'une quelconque des revendications 1 à 3, **caractérisé en ce que** la puissance active générée est pourvue comme grandeur électrique.

5. Procédé selon l'une quelconque des revendications 1 à 3, **caractérisé en ce que** la puissance réactive générée est pourvue comme grandeur électrique.

6. Procédé selon l'une quelconque des revendications 1 à 3, **caractérisé en ce que** l'angle de phase et/ou le facteur de puissance est pourvu comme grandeur électrique.

7. Procédé selon l'une quelconque des revendications 1 à 6, **caractérisé en ce que** la valeur de consigne de la grandeur électrique est prescrite par une unité de commande en amont.

8. Procédé selon la revendication 1, **caractérisé en ce que** la vitesse du vent est mesurée dans un mât météo (14, 16).

9. Procédé selon la revendication 1 ou 8, **caractérisé en ce que** la vitesse du vent est mesurée dans une ou plusieurs des éoliennes.

10. Parc éolien avec une multitude d'éoliennes dont la réserve de régulation est déterminée par le procédé selon les revendications 1 à 9, **caractérisé en ce qu'**une seule unité de commande (18) avec plusieurs courbes de puissances pour des éoliennes individuelles et/ou des groupes d'éoliennes est pourvue.

11. Parc éolien selon la revendication 10, **caractérisé en ce que** la puissance générée est mesurée de manière centrale dans le parc éolien.

12. Parc éolien selon la revendication 10 ou 11, **caractérisé en ce qu'**au moins une éolienne mesure sa puissance générée.

13. Parc éolien selon l'une quelconque des revendications 10 à 12, **caractérisé en ce que** plusieurs unités de commande sont pourvues aux lesquelles une unité de commande est en amont et à laquelle les réserves de régulation de l'unité de commande (18) sont appliquées.
